# EUROPÄISCHE PATENTSCHRIFT

(11) **EP 1 606 039 B1**
(45) Veröffentlichungstag und Bekanntmachung des Hinweises auf die Patenterteilung: **02.07.2008**
(21) Anmeldenummer: 04739060.4
(22) Anmeldetag: 04.03.2004
(51) Int. Cl.: B01D 46/42

(54) **MEHRFUNKTIONSFILTER**
MULTI-FUNCTIONAL FILTER
FILTRE MULTIFONCTION

(30) Priorität: 05.03.2003 DE 10309428
(43) Veröffentlichungstag der Anmeldung: 21.12.2005
(73) Patentinhaber: Donaldson Filtration Deutschland GmbH, 42781 Haan (DE)
(72) Erfinder: SCHUSTER, Hans-Michael, 42781 Haan (DE); EIMER, Klaus, 40883 Ratingen (DE)
(74) Vertreter: Tilmann, Max Wilhelm
(86) Internationale Anmeldenummer: PCT/EP2004/002230
(87) Internationale Veröffentlichungsnummer: WO 2004/091751

(56) Entgegenhaltungen:
- WO-A-96/24426
- US-A- 4 614 204

## Beschreibung

Die vorliegende Erfindung betrifft einen Mehrfunktionsfilter und nimmt die Priorität der deutschen Patentanmeldung 103 09 428.8-23 in Anspruch, auf die inhaltlich Bezug genommen wird.

Druckgas-, insbesondere Druckluftsysteme erfordern Filter zum Abscheiden von im Gasstrom mitgeführten festen und flüssigen Fremdstoffen wie Schmutzpartikel, Kondensat und Öl.

Übliche Druckluftfilter bestehen im allgemeinen aus einem zweiteiligen Gehäuse mit einem Oberteil und einem Unterteil, die entweder miteinander verschraubt oder mittels einer Überwurfmutter oder Bajonettverschluß miteinander verbunden sind. Das Gehäuseoberteil besitzt üblicherweise auf einander diametral gegenüber liegenden Seiten einen Zuström- und einen Abströmkanal. Der Zuströmkanal mündet entweder zentral in ein hohlzylindrisches Filterelement, das in das Oberteil eingeschraubt oder eingeklebt ist, oder in den Ringraum zwischen dem Filterelement und dem Gehäuse. Dementsprechend geht der Abströmkanal entweder von dem Ringraum oder vom Innern des Filterelements ab, je nach dem, ob das Filterelement von innen nach außen oder von außen nach innen durchströmt werden soll. Die Strömungsrichtung im Filter ist daher nach dem Einbau festgelegt und läßt sich in der Einbaulage nicht ändern. Mit der Strömungsrichtung ist gleichzeitig auch das Einsatzgebiet des Filters festgelegt; denn beim Staubfiltern wird das Filterelement von außen und beim Koaleszenzfiltern zum Abscheiden von Druckluftkondensat von Innen durchgeströmt. Herkömmliche Filter eignen sich daher entweder nur als Staub- oder nur als Koaleszenzfilter, wenn nach dem Einbau in das Druckluftsystem die Strömungsrichtung einmal festgelegt ist.

Aus der europäischen Offenlegungsschrift 0 808 206 ist ein Filter bekannt, der mit einer Differenzdruckanzeige zur Überwachung der Filterverschmutzung versehen ist, die über je einem Meßkanal mit dem Zuström- und dem Abströmkanal des Filters verbunden ist. Bei solchen Filtern ist ein Funktionswechsel besonders aufwendig, weil dann nicht nur der Filter um 180° gedreht werden muß, sondern auch die Differenzdruckanzeige, um deren Display wieder auf die Sichtseite zu bringen.

Da sich im Filter abscheidende Flüssigkeit, insbesondere Kondensat im Gehäuseunterteil sammelt und dessen Fassungsvermögen sehr begrenzt ist, ergibt sich zudem die Notwendigkeit, die Flüssigkeit von Zeit zu Zeit abzuleiten. Dies geschieht üblicherweise automatisch niveaugesteuert mit Hilfe eines Kondensatableiters, bei dem ein Niveaufühler in einem Sammelraum für das Kondensat ein Magnetventil ansteuert, das seinerseits ein Membranventil zum Öffnen und Schließen eines Flüssigkeitsauslasses im unteren Teil des Filtergehäuses betätigt. Der Kondensatableiter kann, wie in der PCT-Offenlegungsschrift WO 98/45 641 beschrieben, unterhalb des als Sammelraum für das Kondensat fungierende Filtergehäuse-Unterteils angeordnet sein und zieht das Kondensat über einen Auslaßkanal nach unten ab. Bei einem Filter mit einem derartigen Kondensatableiter ist wegen der Leitungsanschlüsse ein Funktions- bzw. Richtungswechsel der Strömung nach dem Zusammenbau ebenfalls nicht mehr möglich.

Auch wenn während des Filterbetriebs ein Funktionswechsel üblicherweise nicht erforderlich ist, bleibt der Nachteil, daß mit einer Differenzdruckanzeige und/oder mit einem Kondensatableiter versehene Filter jeweils nur für eine Strömungsrichtung eingerichtet sind; sie lassen sich daher ohne einen Umbau entweder nur als Koaleszenzfilter (Strömungsrichtung von innen nach außen) oder als Staubfilter (Strömungsrichtung von außen nach innen) verwenden.

Der Erfindung liegt daher das Problem zugrunde, einen Filter zu schaffen, der auf einfache Weise einen Funktionswechsel auch vor Ort erlaubt.

Die Lösung dieses Problems besteht darin, daß bei einem Filter mit einem Gehäuse aus einem Oberteil und einem Unterteil zwischen den beiden Gehäuseteilen ein drehbarer Anschlußflansch angeordnet ist. Dies erlaubt es, durch einfaches Verdrehen des Anschlußflansches um 180° einen Funktionswechsel herbeizuführen. Die Drehung bewirkt, daß die beiden Filterräume, das Innere des Filterelements einerseits und der Ringraum zwischen dem Filterelement und dem Gehäuse andererseits, jeweils von dem einen Kanal auf den anderen Kanal umgestellt werden.

Der Verwender kann daher vor Ort bzw. vor dem Einbau entscheiden, mit welcher Funktion er den Filter einsetzt. Das Oberteil kann daher mit einer Vorderseite, beispielsweise mit Anzeigeinstrumenten, einem Sichtfenster oder einem Funktionsblock versehen sein und daher stets eine bestimmte Einbaulage erfordern. Dennoch erlaubt der erfindungsgemäße Adapterflansch, den Filter in beiden Strömungsrichtungen zu betreiben. Das vereinfacht die Lagerhaltung sehr wesentlich und führt zu einer erheblichen Kostenersparnis, weil mit einem Oberteil beide Strömungsrichtungen möglich sind.

Der Anschlußflansch besteht in der Draufsicht vorzugsweise aus einer Platte mit zwei Öffnungen und einem Steg, beiderseits dessen zwei spiegelbildlich zueinander angeordnete querschnitts- bzw. deckungsgleiche Öffnungen angeordnet sind. Die Öffnungen verbinden in der Betriebslage die beiden Filterräume (Ringraum / Inneres des Filterelements) mit den beiden Kanälen im Gehäuseoberteil. Dazu führt von einer der Flanschöffnungen ein Kanal (Flanschkanal) zum Innern des Filterelements und von der anderen Flanschöffnung ein Kanal (Flanschkanal) zum Ringraum zwischen dem Filterelement und dem Gehäuse.

Wenn beide Flanschöffnungen von je einem Dichtungsring umgeben und auf diese Weise gegen das Gehäuseoberteil abgedichtet sind, kann es nicht zu einer Leckage zwischen dem Zuström- und dem Abströmkanal kommen, wenn einer oder beide Dichtungsringe defekt sind.

Um das sich im Gehäuseunterteil sammelnde Kondensat nach oben ableiten zu können, erstreckt sich vom Gehäuseoberteil vorzugsweise durch den Anschlußflansch und das Filterelement eine axiale Kondensatleitung bis in den unteren Bereich des Gehäuseunterteils. Dort befindet sich in diesem Fall ein beispielsweise kapazitiver Niveaufühler, der über eine der Kondensatleitung folgende elektrische Leitung mit dem Gehäuseoberteil und einem dort befindlichen Kondensatableiter verbunden sind.

Der kapazitive Niveaufühler kann auch über eine Steigleitung (Kondensatleitung) zum Ableiten des sich um unteren Teil des Filtergehäuses sammelnden Kondensats, eine Steckverbindung zwischen der Steigleitung und einem Kondensatkanal zu einem Auslaßventil und eine elektrische Steckverbindung mit einem Funktionsblock verbunden sein, die vom Niveaufühler kommende elektrische Leitungen mit einer Elektronik im Funktionsblock verbindet. Der Funktionsblock kann auch am Gehäuseunterteil angeordnet und über einen Kanal mit dem Innern des Unterteils sowie mit einem Niveaufühler verbunden sein.

Die Steigleitung kann in dem Ringraum zwischen einem hohlzylindrischen Filterelement und dem Filtergehäuse verlaufen und vorzugsweise mit einem Kopfstück verbunden sein, das eine obere Endkappe des Filterelements umgreift. Um die Steigleitung und das Filterelement im Gehäuse zu fixieren, kann das Filterelement mit radialen Stützrippen versehen und das Kopfstück zwischen je zwei Stützrippen angeordnet sein.

Der am unteren Ende der Steigleitung angeordnete Niveaufühler kann das Filterelement klauenartig untergreifen und das Filterelement gegebenenfalls auch abstützen. Die Steigleitung und mit ihr auch die notwendigen elektrischen Leitungen für den Niveaufühler können auch zentrisch durch das Filterelement zu dem Funktionsblock geführt sein.

Um in Abhängigkeit von der Steuerung durch den Niveaufühler von Zeit zu Zeit Kondensat abzulassen, kann der Funktionsblock ein direkt gesteuertes Magnetventil vorzugsweise mit einem liegenden Tauchanker enthalten. Besonders vorteilhaft ist jedoch die Verwendung eines über ein Elektromagnetventil angesteuertes Membranventil vorzugsweise mit einer stehenden Membrane.

Eine Vereinfachung der Montage und Demontage ergibt sich, wenn die Energie- und Informationsübertragung zwischen dem Ableitadapter und der Funktionseinheit mit Hilfe zweier Spulen und eines Ferritkerns geschieht.

Ein leichtes Anpassen an unterschiedliche Rohrdurchmesser des Druckluftsystems und eine vereinfachte Lagerhaltung ergibt sich schließlich, wenn der Zuström- und der Abströmkanal mit einem Anschlußadapter versehen sind.

Die Erfindung wird nachfolgend anhand von in der Zeichnung dargestellten Ausführungsbeispielen des näheren erläutert. In der Zeichnung zeigen:
- Fig. 1: einen axialen Längsschnitt durch einen Filter in schematischer Darstellung;

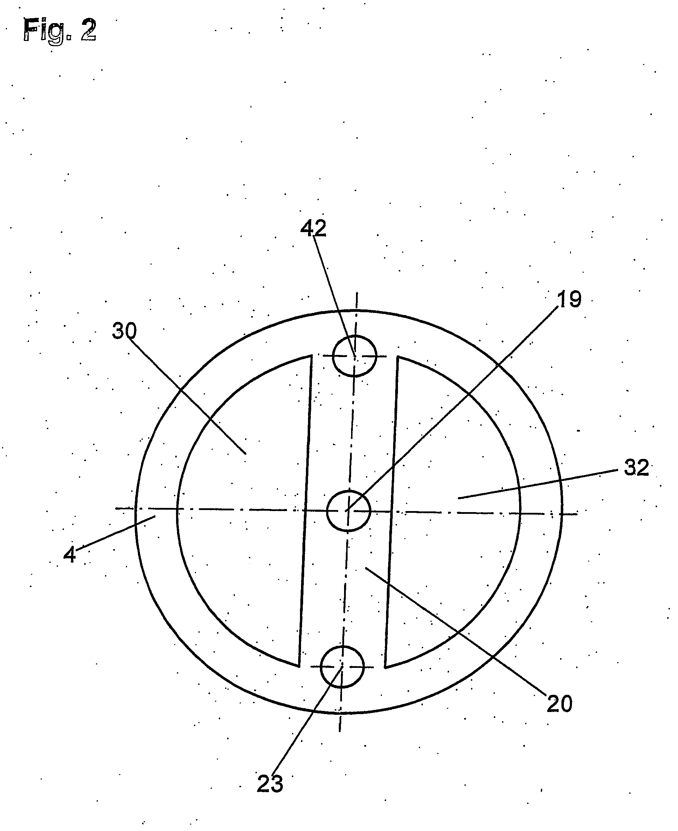

- Fig.2: eine Draufsicht auf einen Anschlußflansch in schematischer Darstellung;
- Fig. 3: eine schematische Darstellung der wesentlichen Bauelemente des Filters;
- Fig.4: die Seitenansicht eines Filterelements mit einem Anschlußflansch als Baueinheit;
- Fig. 5: eine Draufsicht auf den Anschlußflansch der Baueinheit gemäß Fig. 4;
- Fig.6: einen Filter mit einer Differenzdruckanzeige in der Funktionsstellung für eine Koaleszenzfiltration;
- Fig.7: den Filter gemäß Fig. 4 in der Funktionsstellung Staubfiltration;
- Fig.8: den unteren Gehäuseteil eines Filters für ein Oberteil mit Kondensatableiter;
- Fig. 9: ein mit einem Anschlußflansch einerseits und einem Niveaufühler sowie einer Kondensatleitung einstückig verbundenes Filterelement.
- Fig. 10: die schematische Darstellung des inneren Aufbaus eines Filters mit einem Kondensatableiter und einem Funktionsblock;
- Fig. 11: die perspektivische Darstellung eines Funktionsblocks mit einem Membranventil zum Ableiten von Kondensat.
- Fig.12: ein Schnitt nach der Linie XI - XI in Fig. 12 und
- Fig.13: einen Schnitt durch das Gehäuseoberteil in der Ebene der Mittelachsen des Ein- und des Auslasses.

Der dargestellte Filter 1 besteht aus einem Oberteil 2 und einem Unterteil 3, zwischen denen ein Anschlußflansch 4 angeordnet ist. Das Oberteil 2 besitzt zwei Anschlußadapter 5, 6, über die sich der Filter 1 beispielsweise in eine nicht dargestellte Druckluftleitung einfügen läßt. Zwischen einem Innenkragen 7 des Oberteils 2 und einem Anschlußring 8 des Gehäuseunterteils ist der lose eingesetzte Anschlußflansch 4 mit Hilfe einer Überwurfmutter 9 eingespannt. Der Anschlußring 8 ist mit einem zylindrischen Mittelstück 10 des Gehäuses fest verbunden, an das sich eine Bodenkappe 11 anschließt.

In eine Nut 12 des Anschlußflansches 4 greift der obere Rand eines hohlzylindrischen, unten mit einem Deckel 13 verschlossenen Filterelements 14, das in der Nut 12 verklebt oder dichtend eingespannt ist. Der Deckel 13 besitzt ebenfalls eine umlaufende Nut 15, in welcher der untere Rand des Filterelements 14 eingeklebt oder eingespannt ist. Der Deckel 13 trägt einen kapazitiven Niveaufühler 16 mit zwei ringförmigen Elektroden 17, 18. Ein Kondensatrohr 19 erstreckt sich als Steigleitung durch einen Steg 20 des Anschlußflansches 4, den Innenraum 21 des Filterelements 14 und dessen Deckel 13 bis in das Innere 22 des Gehäuseunterteils 3. Dem Kondensatrohr 19 folgt eine nicht dargestellte elektrische Leitung, die mit einem Kontaktstift 23 im Anschlußflansch 4 verbunden ist. Der Kontaktstift 23 greift in eine nicht dargestellte Kontaktbuchse des Gehäuseoberteils 2 ein und ist mit einem Funktionsblock 24 auf dem Gehäuseoberteil 2 elektrisch verbunden.

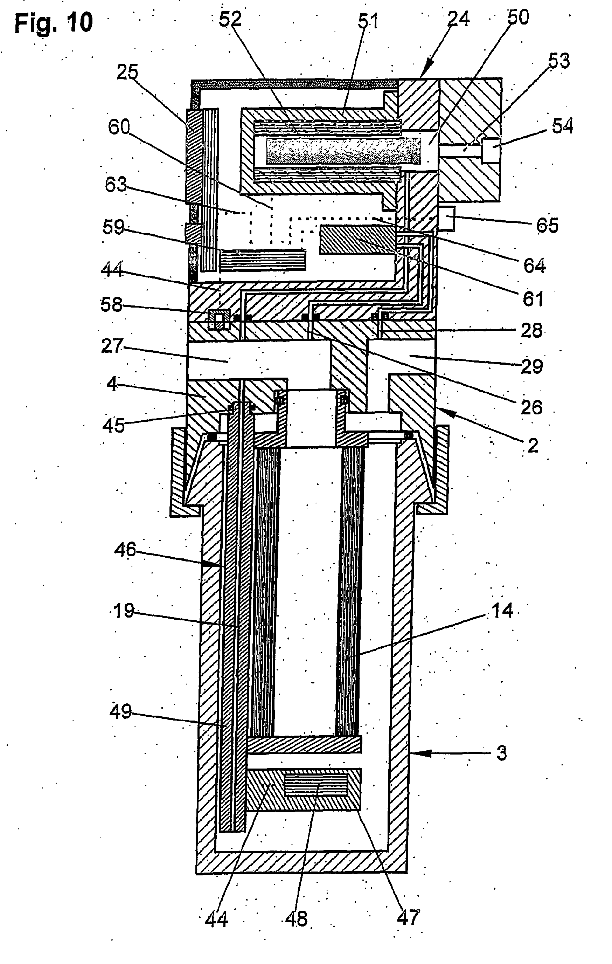

Der Funktionsblock 24 enthält einen Differenzdruckmesser 61 mit einem Display 25 und ist über einen Kanal 26 mit einem Zuströmkanal 27 für Rohgas und einem Kanal 28 mit einem Abströmkanal 29 für das Frischgas verbunden (Fig. 10). Der Zuströmkanal 27 und der Abströmkanal 29 sind durch eine Zwischenwand 81 voneinander getrennt, die sehr dünn sein kann, sich aber auch für die Aufnahme von Leitungen oder auch Instrumenten eignet.

Der Zuströmkanal 27 mündet in die Öffnung 30 eines Flanschkanals 31, der den Zuströmkanal 27 mit dem Innenraum 21 des Filterelements 14 verbindet. Der Abströmkanal 29 steht hingegen mit der Öffnung 32 eines Flanschkanals 33 in Verbindung, der zu dem Ringraum 34 des Gehäuseunterteils 3 führt.

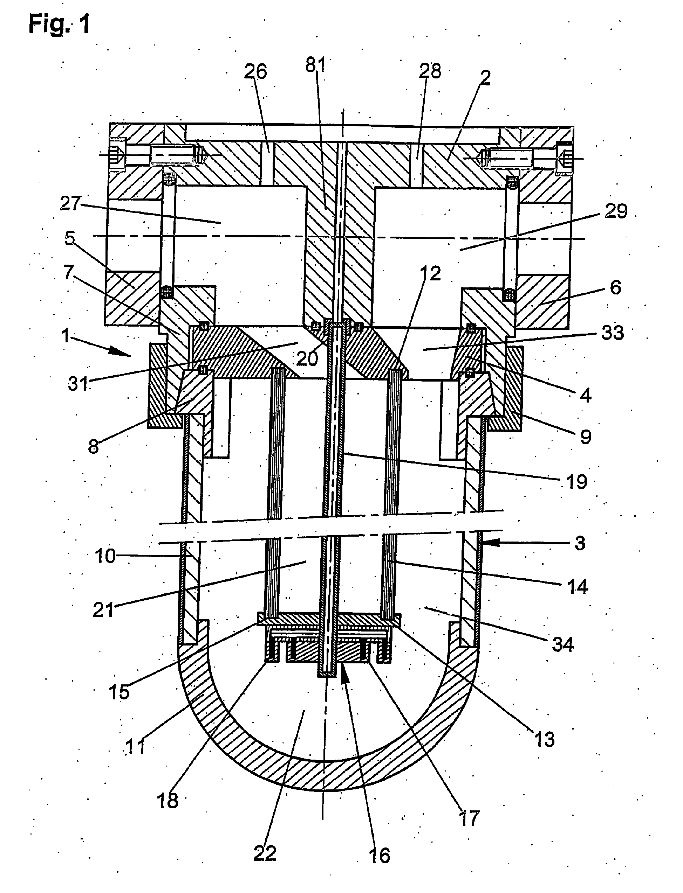

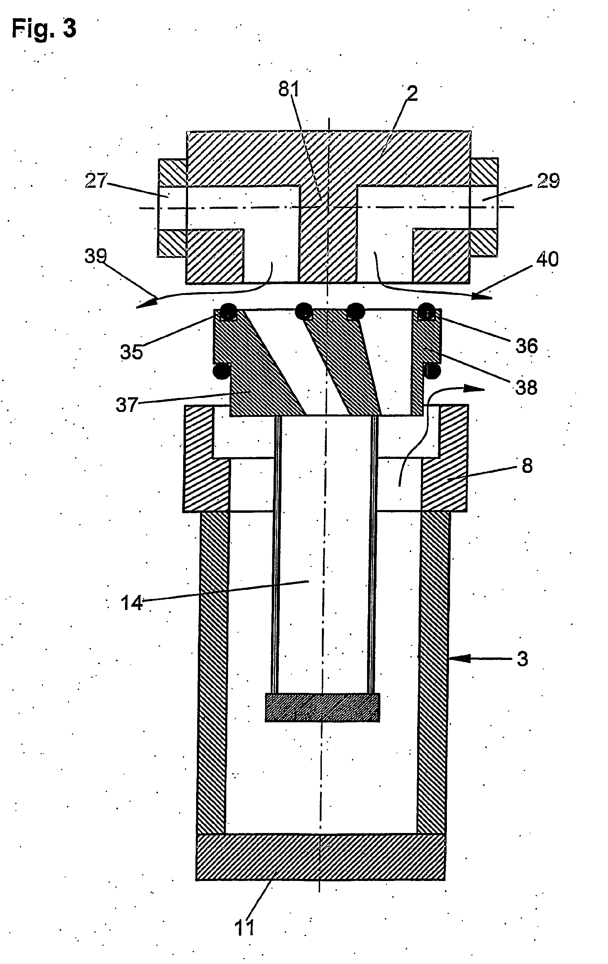

Die Kanalöffnungen 30, 32 sind von Dichtungsringen 35, 36 in Nuten 37, 38 umgeben. Demgemäß kann es im Falle einer defekten Dichtung nicht zu einer Leckage zwischen den beiden Gaskanälen 27, 29 kommen. Vielmehr gelangt das Rohgas im Falle eines defekten Dichtungsrings 35 oder das Reingas im Falle eines defekten Dichtungsrings 36 entsprechend den Richtungspfeilen 39, 40 jeweils in die Atmosphäre. Bei der Positionierung des Anschlußflansches gemäß Fig. 1, 3, 5, 6 strömt das Rohgas durch den Zuströmkanal 27 und den Flanschkanal 31 in das Innere 21 des Filterelements 14; der Filter dient dann als Koaleszenzfilter. Von dort durchströmt das Rohgas die Filterschichten des Filterelements 14 und gelangt als Reingas schließlich aus dem Ringraum 34 durch den Flanschkanal 33 und den Abströmkanal 29 in eine nicht dargestellte Reingasleitung.

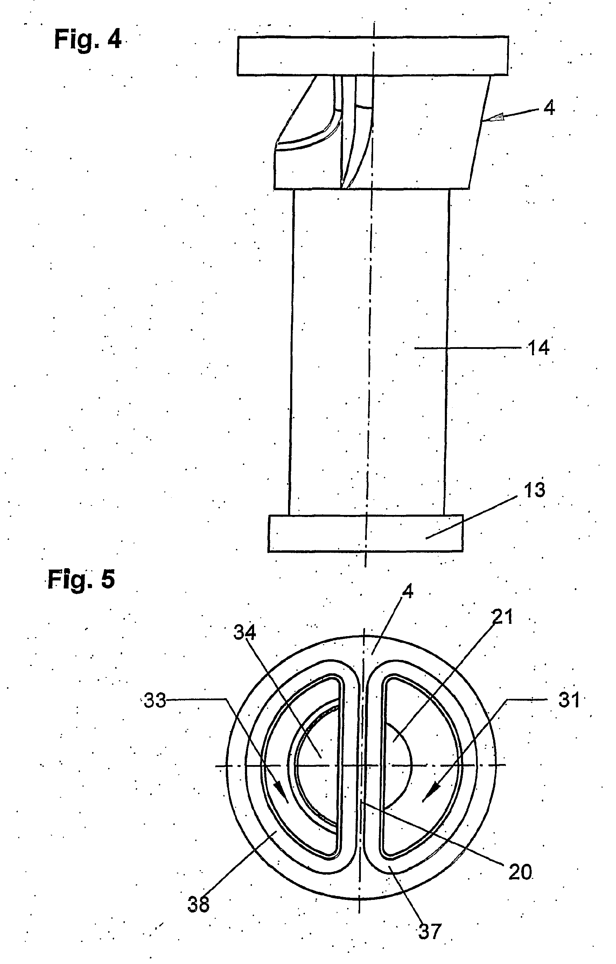

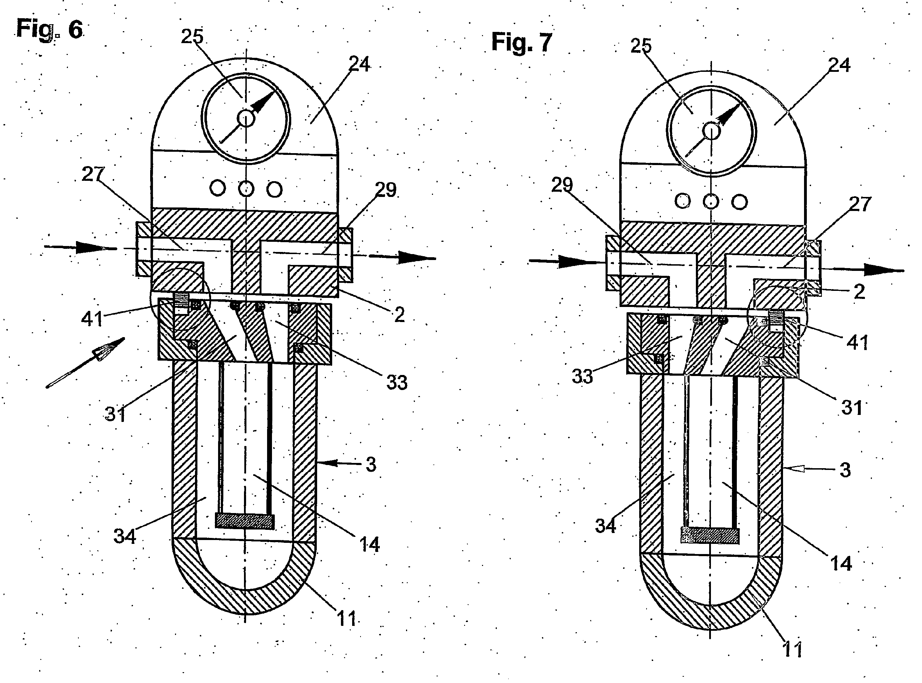

Soll derselbe Filter in anderer Funktion, d. h. als Staubfilter, eingesetzt werden, wird der Anschlußflansch 4 vor dem Einbau aus der Position in Fig. 1, 3, 5, 6 nach einem leichten Lösen der Überwurfmutter 9 um 180° in die Position gemäß Fig. 7 gedreht. Danach wird die Überwurfmutter wieder angezogen und der Filter eingebaut. Beim Verstellen des Anschlußflansch 4 wird der Flanschkanal 33 unter den Zuströmkanal 27 gedreht und stellt so eine Verbindung zu dem Ringraum 34 her, während die Öffnung 32 des Flanschkanals unter den Abströmkanal 29 gelangt und der Flanschkanal 31 so eine Verbindung zum Innern 21 des Filterelements 14 herstellt. In dieser, in Fig. 7 dargestellten Situation strömt das Rohgas vom Zuflußkanal 29 durch den Flanschkanal 33 in den Ringraum 34 und von außen in das Innere 21 des Filterelements 14 sowie von dort über den Flanschkanal 31 zum Abströmkanal 27. Wie sich aus einem Vergleich der Fig. 6 und 5 ergibt, ist der Kanal 27 in Fig. 6 Zuström- und in Fig. 7 Abströmkanal, während der Kanal 29 in Fig. 6 Abström- und in Fig. 7 Zuströmkanal ist.

Der Funktionswechsel ist bei dem dargestellten Filter durch bloßes Verdrehen des Anschlußflansches 4 gegenüber dem Filteroberteil 2 um 180° möglich, weil die Kanalöffnungen 30, 32 sowie die ihnen gegenüber liegenden Öffnungen des Zuströmkanals 27 und des Abströmkanals 29 spiegelbildlich zueinander angeordnet und deckungsgleich ausgebildet sind, wie sich dies für die Kanalöffnungen 30, 32 am deutlichsten aus Fig. 5 ergibt.

Um den Anschlußflansch 4 bei einem Wechsel des Filterelements in die richtige, d. h. funktionsgerechte Einbaulage zu bringen, greift ein Positionierstift 41 am Gehäuseoberteil 2 in eine korrespondierende Bohrung 42 am Anschlußflansch 4, wie das in den Fig. 1, 6, 7 dargestellt ist.

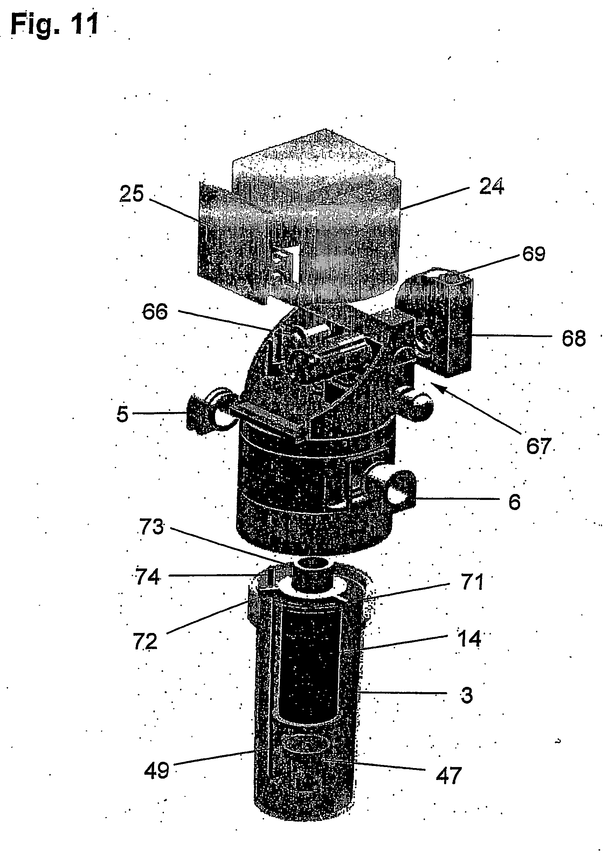

Das Niveau des sich am Boden des Gehäuseunterteils sammelnden Kondensats erreicht mit der Zeit die Elektroden 17, 18 und schließt damit einen Stromkreis, in dem das Magnetventil des in dem Funktionsblock 24 befindlichen Kondensatableiters liegt, mit der Folge, daß ein Ventil des Kondensatableiters (vgl. Fig. 10, 11) öffnet und das Kondensat unter dem Einfluß des im Innenraum 22 des Filtergehäuses 2, 3 herrschenden Systemdrucks über das Kondensatrohr 19 abfließt, bis das Niveau des Kondensats im Gehäuseunterteil 3 bis unterhalb der Elektroden 17, 18 abgesunken und der Stromkreis wieder unterbrochen ist.

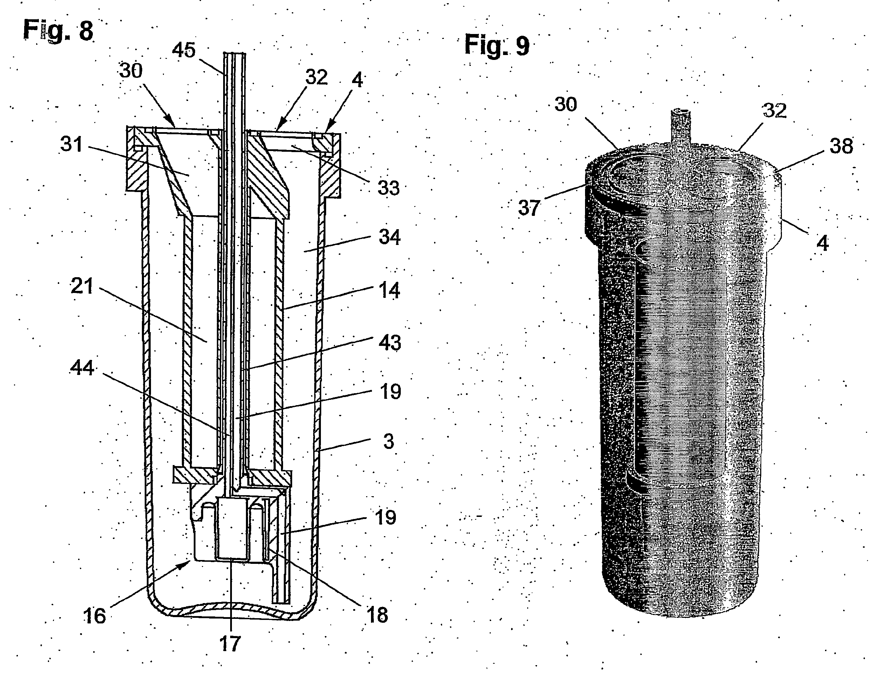

Bei dem in Fig. 8 schematisch dargestellten Filter bilden der Anschlußflansch 4 und das Filterelement 14 einerseits sowie das Kondensatrohr 19 mit dem Niveaufühler 16 andererseits jeweils eine bauliche Einheit. Das Kondensatrohr 19 ist von einem Hüllrohr 43 umgeben, das auch die elektrischen Leitungen 44 von den Elektroden 17, 18 zu dem Funktionsblock 24 aufnimmt. Das Kondensatrohr 19 und die elektrischen Leitungen 44 enden in einem Stecker 45, der in eine nicht dargestellte Buchse im Gehäuseoberteil 2 eingreift.

Die in Fig. 9 dargestellte Baueinheit aus Anschlußflansch 4, Filterelement 14, Niveaufühler 16 und Kondensatrohr 19 zeigt in perspektivischer Darstellung die beiden symmetrisch angeordneten Flanschöffnungen 30, 32 mit den umlaufenden Nuten 37, 38 für die Dichtungsringe 35, 36, die verhindern, daß Rohgas im Falle eines defekten Dichtungsrings 35 in den Frischgaskanal 29 gelangt.

Bei dem in Fig. 10 dargestellten Ausführungsbeispiel ist zwischen dem Gehäuseoberteil 2 und dem Gehäuseunterteil 3 wiederum ein Anschlußflansch 4 angeordnet, der zugleich eine Verbindung zwischen einem Ableitadapter 46 und dem Funktionsblock 24 herstellt. Der Ableitadapter 46 besteht aus einem Niveaufühler 47 mit einer Platine 48, der das Filterelement 14 klauenartig untergreift und mit einer Steigleitung 49 verbunden ist. Die Steigleitung 49 nimmt die elektrischen Leitungen 44 von der Platine 48 auf und mündet in einem Stecker 45 des Anschlußflansches 4. Der vom unteren Teil des Filtergehäuses 2, 3 ausgehende Kondensatkanal 19 setzt sich durch den Anschlußflansch 4, das Gehäuseoberteil 2 und den Funktionsblock 24 bis in eine Ableitkammer 50 des Funktionsblocks 24 fort. Diese Ableitkammer ist mit einem elektromagnetischen Auslaßventil 51 versehen, dessen Tauchanker 52 liegend bzw. horizontal angeordnet ist und die Ventilöffnung 53 eines Ableitkanals 54 - von dem Niveaufühler 47 gesteuert - öffnet und verschließt. Der Niveaufühler 47 bzw. dessen Platine 48 ist dazu über die Leitungen 44 und zwei Steckverbindungen 56, 57 im Bereich des Anschlußflansches 4 sowie eine Steckverbindungen 58 zwischen dem Gehäuseoberteil 2 und dem Funktionsblock 24 mit einer Platine 59 im Funktionsblock 24 verbunden, von dem eine elektrische Leitung 60 zu dem Elektromagnetventil 51 führt.

Die Kanäle 26, 28 vom Zuströmkanal 27 für Rohgas und vom Abströmkanal 29 für das Frischgas führen zu einem Differenzdruckmesser 61, der über eine elektrische Leitung 62 ebenfalls mit der Platine 59 verbunden ist. Die Platine 59 ist des weiteren über eine elektrische Leitung 63 mit dem Display 25 und über eine Leitung 64 mit einem Stecker 65 für die Energieversorgung verbunden.

Anstelle des vom Niveaufühler 47 direkt gesteuerten Elektromagnetventils 51 kann, wie in Fig. 11 dargestellt, auch ein von einem mit dem Niveaufühler 47 elektrisch verbundenen elektronmagnetischen Vorsteuerventil 66 gesteuertes Membranventil 67 treten, von dem in Fig. 11 nur der Membrandeckel 68 mit einer Ventilöffnung 69 dargestellt ist, die zu einem quer zu der Ventilöffnung 53 verlaufenden nicht dargestellten Ableitkanal führt. Der Membrandeckel 68 nimmt die Membrane auf, deren Steuerkammer über eine nicht dargestellte By-Pass-Leitung mit dem Ableitkanal 53 verbunden ist. Diese Steuerleitung wird von dem elektromagnetischen Vorsteuerventil 66 in Abhängigkeit von den Signalen des Niveaufühlers 47 geöffnet und verschlossen. Beim Öffnen der Steuerleitung wird die Steuerkammer entlüftet, so daß die Membrane von der Ventilöffnung 69 abhebt und das im unteren Teil des Filtergehäuses 3 angesammelte Kondensat unter dem Einfluß der dort wirksamen Druckluft über die Steigleitung 49 abfließen kann, bis sich das Niveau des Kondensats soweit abgesenkt hat, daß der Niveaufühler 47 ein entsprechendes Signal an das Vorsteuerventil abgibt.

In den Zuström- und den Abströmkanal 28, 29 sind Anschlußadapter 79, 80 eingeschraubt oder eingesteckt, die auf die Nennweiten der Druckluftleitungen abgestimmt sind.

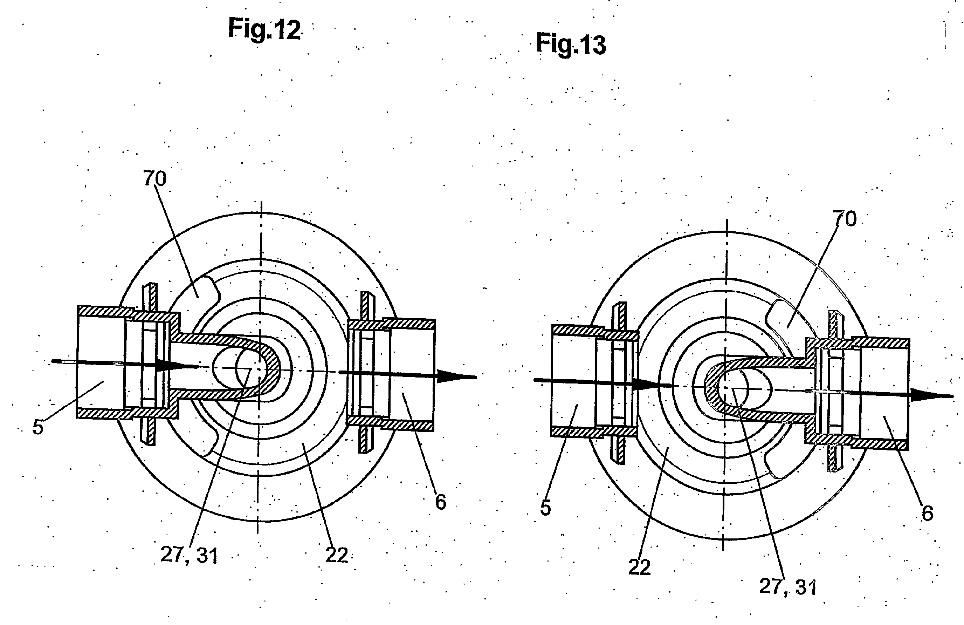

Fig. 12 zeigt in einem Schnitt, teilweise auch in Draufsicht, das Gehäuseoberteil 2 mit dem Filterelement 14, dessen Ringraum 22 und dem Zuströmkanal 27 mit dem Anschlußadapter 5. Dabei ist deutlich erkennbar, wie der Zuströmkanal 27 über den Flanschkanal 31 direkt in das Innere 21 des Filterelements 14 mündet. Mit einer Drehung des Anschlußflansches 4 mit dem Flanschkanal 21 in die in Fig. 13 dargestellte Lage ist ein Funktionswechsel verbunden, weil dann der Anschlußadapter 6 mit der Rohluftleitung und der Anschlußadapter 5 bzw. die Kanäle 27, 31 mit der Reinluftleitung verbunden sind, die Druckluft mit in das Filterelement von außen nach innen durchströmt.

Das Filterelement der Fig. 11, 12, 13 ist des weiteren mit den radialen Stützrippen 71, 72, 73 versehen, die das Filterelement im Gehäuse zentrieren und zwischen sich ein Kopfstück 74 am oberen Ende des Ableitadapters 46 aufnehmen.

## Patentansprüche

1. Filter mit einem Gehäuse, mit einem einen Zuströmkanal (27) sowie einen Abströmkanal (29) aufweisenden Oberteil (2) und einem einen Ringraum (34) umfassenden Unterteil (3) mit einem Filterelement (14) umfassend einen Innenraum (21), **dadurch gekennzeichnet, daß** zwischen Gehäuseunterteil (3) und Gehäuseoberteil (2) ein drehbarer Anschlußflansch (4) derart angeordnet ist, daß durch die Drehung des Anschlußflansches (4) der Innenraum (21) des Filterelements sowie der Ringraum (34) zwischen dem Filterelement (14) und dem Gehäuse von einem Kanal auf den anderen Kanal des Oberteils (2) umstellbar sind.

2. Fitter nach Anspruch 1, **dadurch gekennzeichnet, daß** der Anschlußflansch (4) in der Draufsicht aus einer Platte mit zwei Öffnungen und einem Steg (20) besteht.

3. Filter nach Anspruch 1 oder 2, **dadurch gekennzeichnet, daß** der Anschlußflansch (4) zwischen dem Gehäuseoberteil (2) und einem Anschlußring (8) des Gehäuseunterteils (3) eingespannt ist.

4. Filter nach Anspruch 3, **dadurch gekennzeichnet, daß** sich zwischen dem Anschlußflansch (4) und dem Anschlußring (8) ein Dichtungsring befindet.

5. Filter nach einem der Ansprüche 1 bis 4, **dadurch gekennzeichnet, daß** der Anschlußflansch (4) mit dem Gehäuseoberteil (2) drehbar und mit dem Filterelement (14) drehfest verbunden ist.

6. Filter nach einem der Ansprüche 1 bis 5, **dadurch gekennzeichnet, daß** der Anschlußflansch (4) mit zwei spiegelbildlich zueinander angeordneten deckungsgleichen Öffnungen (30, 32) versehen ist.

7. Filter nach Anspruch 6, **gekennzeichnet durch** beiderseits des Stegs (20) spiegelbildlich angeordnete segmentförmige Öffnungen (30, 32).

8. Filter nach einem der vorherigen Ansprüche, **dadurch gekennzeichnet, daß** die beiden Kanäle (27, 29) L- oder bogenförmig verlaufen.

9. Filter nach einem der Ansprüche 6 bis 8, **dadurch gekennzeichnet, daß** die Öffnungen (30, 32) im Anschlußflansch (4) von je einem Dichtungsring (35, 36) umgeben sind.

10. Filter nach einem der vorherigen Ansprüche, **dadurch gekennzeichnet, daß** vom Gehäuseoberteil (2) durch den Anschlußflansch (4) eine axiale Kondensatleitung mit einem das Filterelement (14) durchragenden Kondensatrohr (19) ausgeht.

11. Filter nach einem der vorherigen Ansprüche, **dadurch gekennzeichnet, daß** das Gehäuseunterteil (3) aus einem zylindrischen Mittelteil (10), einem Anschlußring (8) und einer Bodenkappe (11) besteht.

12. Filter nach einem der vorherigen Ansprüche, **dadurch gekennzeichnet, daß** der Anschlußflansch (4) mit dem Filterelement (14) eine Baueinheit bildet.

13. Filter nach einem der vorherigen Ansprüche, **dadurch gekennzeichnet, daß** unterhalb des freien Endes des Filterelements (14) ein Niveaufühler (16) angeordnet ist.

14. Filter nach einem der vorherigen Ansprüche, **dadurch gekennzeichnet, daß** das Gehäuseoberteil (2) mit einem in eine Positionieröffnung (42) eingreifenden Positionierstift (41) versehen ist.

15. Filter nach einem der vorherigen Ansprüche, **dadurch gekennzeichnet, daß** das Gehäuseoberteil (2) und das Gehäuseunterteil (3) mit einem Funktionsblock (24) mit einer Differenzdruckanzeige (25) und einem Kondensatableiter verbunden ist.

16. Filter nach einem der vorherigen Ansprüche, **dadurch gekennzeichnet, daß** ein Niveaufühler (47) über einen Ableitadapter (46) mit einer Steigleitung (19), eine Steckverbindung (45) für Kondensat und eine elektrische Steckverbindung (58) mit dem Funktionsblock (24) verbunden ist.

17. Filter nach Anspruch 16, **dadurch gekennzeichnet, daß** der Ableitadapter (46) zwischen dem Filterelement (14) und dem Gehäuseunterteil (3) verläuft.

18. Filter nach einem der vorherigen Ansprüche, **dadurch gekennzeichnet, daß** der Ableitadapter (46) das Filterelement mit einem Kopfstück (70) umgreift.

19. Filter nach einem der vorherigen Ansprüche, **dadurch gekennzeichnet, daß** das Filterelement (14) mit radialen Stützrippen (71, 72, 73) versehen ist und das Kopfstück (70) zwischen je zwei Stützrippen (71, 72) angeordnet ist.

20. Filter nach einem der vorherigen Ansprüche, **dadurch gekennzeichnet, daß** der Niveaufühler (47) das Filterelement (14) klauenartig untergreift.

21. Filter nach einem der vorherigen Ansprüche, **dadurch gekennzeichnet, daß** der Deckel (13) und der Niveaufühler (16, 47) eine Baueinheit bilden.

22. Filter nach einem der vorherigen Ansprüche, **dadurch gekennzeichnet, daß** eine zentrische Steigleitung (19) durch das Filterelement (14) zum Funktionsblock (24) führt.

23. Filter nach einem der vorherigen Ansprüche, **dadurch gekennzeichnet, daß** im Funktionsblock (24) ein vom Niveaufühler (47) direkt gesteuertes Magnetventil (51) mit liegendem Tauchanker (52) angeordnet ist.

24. Filter nach einem der vorherigen Ansprüche, **dadurch gekennzeichnet, daß** der Funktionsblock (24) mit einem über ein Elektromagnetventil (66) vorgesteuertes Membranventil (67) mit stehender Membrane versehen ist.

25. Filter nach einem der vorherigen Ansprüche, **gekennzeichnet durch** eine kontaktlose Energie- und Informationsübertragung zwischen dem Ableitadapter (47) und der Funktionseinheit (24) mit Hilfe zweier Spulen und eines Ferritkerns.

26. Filter nach einem der vorherigen Ansprüche, **dadurch gekennzeichnet, daß** der Zuström- und der Abströmkanal (28, 29) mit Anschlußadaptem (5, 6) versehen sind.

27. Filter nach einem der vorherigen Ansprüche, **dadurch gekennzeichnet, daß** sich zwischen dem Zuström- und dem Abströmkanal (28, 29) eine Trennwand (81) erstreckt.

28. Filterelement (14) mit einem Innenraum (21) für einen Filter mit einem Gehäuse mit einem Oberteil (2) und einem einen Ringraum (34) umfassenden Unterteil (3), wobei das Oberteil (2) einen Zuströmkanal (27) und einen Abströmkanal (29) aufweist, **dadurch gekennzeichnet, daß** das Filterelement (14) mit einem Anschlußflansch (4) versehen Ist, der mit dem Oberteil (2) des Gehäuses derart drehbar verbunden ist, daß durch die Drehung des Anschlußflansches (4) der Innenraum (21) des Filterelements (14) sowie der Ringraum (34) zwischen dem Filterelement (14) und dem Gehäuse von einem Kanal auf den anderen Kanal des Oberteils (2) umstellbar sind.

29. Filterelement (14) nach Anspruch 28, **dadurch gekennzeichnet daß** das Filterelement (14) mit dem Anschlußflansch (4) eine Baueinheit bildet.

30. Filterelement (14) nach Anspruch 28 oder 29, **dadurch gekennzeichnet, daß** der Anschlußflansch (4) in der Draufsicht aus einer Platte mit zwei Öffnungen und einem Steg (20) besteht.

31. Filterelement (14) nach Anspruch 30, **dadurch gekennzeichnet, daß** der Anschlußflansch (4) mit zwei spiegelbildlich zueinander angeordneten deckungsgleichen Öffnungen (30, 32) versehen ist.

32. Filterelement (14) nach einem der Ansprüche 30 oder 31, **gekennzeichnet durch** beiderseits des Stegs (20) spiegelbildlich angeordnete segmentförmige Öffnungen (30, 32).

33. Filterelement (14) nach einem der Ansprüche 30 bis 32, **dadurch gekennzeichnet daß** die Öffnungen (30, 32) im Anschlußflansch (4) von je einem Dichtungsring (35, 36) umgeben sind.

## Claims

1. Filter, comprising a housing composed of a top part (2) with an inflow passage (27) as well as an outflow passage (29) and a bottom part (3) having an annular space (34) with a filter element (14) having an interior (21), **characterized in that** a rotatable connection flange (4) is arranged between the bottom part (3) and the top part (2) of the housing so that, by rotating the connection flange (4), the interior (21) of the filter element as well as the annular space (34) between the filter element (14) and the housing can be switched from one passage to the other passage of the top part (2).

2. Filter according to claim 1, **characterized in that** the connection flange (4), when seen in plan view, comprises a plate with two openings and a web (20).

3. Filter according to claim 1 or 2, **characterized in that** the connection flange (4) is clamped between the top part (2) of the housing and a connection ring (8) of the bottom part (3) of the housing.

4. Filter according to claim 3, **characterized in that** a sealing ring is located between the connection flange (4) and the connection ring (8).

5. Filter according to anyone of claims 1 to 4, **characterized in that** the connection flange (4) is connected rotatably to the top part (2) of the housing and in a manner fixed against rotation to the filter element (14).

6. Filter according to anyone of claims 1 to 5, **characterized in that** the connection flange (4) is provided with two congruent openings (30, 32) arranged as mirror images with respect to one another.

7. Filter according to claim 6, **characterized by** openings (30, 32) arranged as mirror images on either side of the web (20) and having a segment-shaped configuration.

8. Filter according to anyone of the above claims, **characterized in that** the two passages (27, 29) run in an L shape or in the shape of an arc.

9. Filter according to anyone of claims 6 to 8, **characterized in that** the openings (30, 32) in the connection flange (4) are each surrounded by a sealing ring (35, 36).

10. Filter according to anyone of the above claims, **characterized in that** an axial condensate line extends from the top part (2) of the housing through the connection flange (4) and having a condensate tube (19) projecting through the filter element (14).

11. Filter according to anyone of the above claims, **characterized in that** the bottom part (3) of the housing comprises a cylindrical centre part (10), a connection ring (8) and a bottom cap (11).

12. Filter according to anyone of the above claims, **characterized in that** the connection flange (4) forms a unitary structure with the filter element (14).

13. Filter according to anyone of the above claims, **characterized in that** a level sensor (16) is arranged below the free end of the filter element (14).

14. Filter according to anyone of the above claims, **characterized in that** the top part (2) of the housing is provided with a positioning pin (41) to engage a positioning opening (42).

15. Filter according to anyone of the above claims, **characterized in that** the top part (2) and the bottom part (3) of the housing are connected to a functional block (24) having a differential pressure indicator (25) and a condensate discharge.

16. Filter according to anyone of the above claims, **characterized in that** a level sensor (47) is connected to a riser line (19) via a discharge adaptor (46), a plug connection (45) intended for condensate and an electrical plug connection (58) being connected to the functional block (24).

17. Filter according to claim 16, **characterized in that** the discharge adaptor (46) runs between the filter element (14) and the bottom part (3) of the housing.

18. Filter according to anyone of the above claims, **characterized in that** the discharge adaptor (46) engages around the filter element (14) by means of a headpiece (70).

19. Filter according to anyone of the above claims, **characterized in that** the filter element (14) is provided with radial supporting ribs (71, 72, 73), and the headpiece (70) is arranged between two of the supporting ribs (71, 72).

20. Filter according to anyone of the above claims, **characterized in that** the level sensor (47) engages beneath the filter element (14) in the manner of a claw.

21. Filter according to anyone of the above claims, **characterized in that** the cover (13) and the level sensor (16, 47) form a unitary structure.

22. Filter according to anyone of the above claims, **characterized in that** a central riser line (19) is routed through the filter element (14) to the functional block (24).

23. Filter according to anyone of the above claims, **characterized in that** a solenoid valve (51) directly controlled by the sensor level (47), said solenoid valve having a horizontal solenoid plunger (52), is provided in the functional block (24).

24. Filter according to anyone of the above claims, **characterized in that** the functional block (24) is provided with a diaphragm valve (67) which has a vertical diaphragm and is subject to pilot control via an electromagnetic valve (66).

25. Filter according to anyone of the above claims, **characterized by** a contactless transmission system for transmitting energy and information between the discharge adaptor (47) and the functional unit (24), the transmission system having two coils and a ferrite core.

26. Filter according to anyone of the above claims, **characterized in that** the inflow and the outflow passage (28, 29) are provided with connection adaptors (5, 6).

27. Filter according to anyone of the above claims, **characterized in that** a partition wall (81) extends between the inflow and the outflow passage (28, 29).

28. Filter element (14), comprising an interior (21) for a filter with a housing composed of a top part (2) and a bottom part (3) with an annular space (34), the top part (2) having an inflow passage (27) and an outflow passage (29), **characterized in that** the filter element (14) is provided with a connection flange (4), which is connected rotatably to the top part (2) of the housing so that, by rotating the connection flange (4), the interior (21) of the filter element as well as the annular space (34) between the filter element (14) and the housing can be switched from one passage to the other passage of the top part (2).

29. Filter element (14) according to claim 28, **characterized in that** the filter element (14) forms a unitary structure with the connection flange (4).

30. Filter element (14) according to claim 28 or 29, **characterized in that** the connection flange (4), when seen in plan view, comprises a plate with two openings and a web (20).

31. Filter element (14) according to claim 30, **characterized in that** the connection flange (4) is provided with two congruent openings (30, 32) arranged as mirror images with respect to one another.

32. Filter element (14) according to either of claims 30 or 31, **characterized by** openings (30, 32) arranged as mirror images on either side of the web (20) and having a segment-shaped configuration.

33. Filter element (14) according to anyone of claims 30 to 32, **characterized in that** the openings (30, 32) in the connection flange (4) are each surrounded by a sealing ring (35, 36).

## Revendications

1. Filtre doté d'un boîtier, avec un élément supérieur (2) présentant un canal d'amenée (27) ainsi qu'un canal d'évacuation (29) et un élément inférieur (3) comprenant un espace annulaire (34) avec un élément filtrant (14) comprenant un espace intérieur (21), **caractérisé en ce qu'**une bride de raccordement (4) rotative est disposée entre l'élément inférieur de boîtier (3) et l'élément supérieur de boîtier (2) de sorte que la rotation de la bride de raccordement (4) permet de déplacer l'espace intérieur (21) de l'élément filtrant ainsi que l'espace annulaire (34) entre l'élément filtrant (14) et le boîtier d'un canal à l'autre canal de l'élément supérieur (2).

2. Filtre selon la revendication 1, **caractérisé en ce que** la bride de raccordement (4) se compose en la vue de dessus d'une plaque avec deux ouvertures et une nervure (20).

3. Filtre selon la revendication 1 ou 2, **caractérisé en ce que** la bride de raccordement (4) est serrée entre l'élément supérieur de boîtier (2) et une bague de raccordement (8) de l'élément inférieur de boîtier (3).

4. Filtre selon la revendication 3, **caractérisé en ce qu'**une bague d'étanchéité se trouve entre la bride de raccordement (4) et la bague de raccordement (8).

5. Filtre selon l'une quelconque des revendications 1 à 4, **caractérisé en ce que** la bride de raccordement (4) est reliée de manière rotative à l'élément supérieur de boîtier (2) et de manière solidaire en rotation à l'élément filtrant (14).

6. Filtre selon l'une quelconque des revendications 1 à 5, **caractérisé en ce que** la bride de raccordement (4) est pourvue de deux ouvertures (30, 32) coïncidentes disposées de manière énantiomorphe.

7. Filtre selon la revendication 6, **caractérisé par** des ouvertures (30, 32) en forme de segment disposées de manière énantiomorphe des deux côtés de la nervure (20).

8. Filtre selon l'une quelconque des revendications précédentes, **caractérisé en ce que** les deux canaux (27, 29) s'étendent en forme de L ou en arc.

9. Filtre selon l'une quelconque des revendications 6 à 8, **caractérisé en ce que** les ouvertures (30, 32) sont entourées dans la bride de raccordement (4) par respectivement une bague d'étanchéité (35, 36).

10. Filtre selon l'une quelconque des revendications précédentes, **caractérisé en ce qu'**une conduite de condensat axiale avec un tuyau de condensat (19) traversant l'élément filtrant (14) part de l'élément supérieur de boîtier (2) à travers la bride de raccordement (4).

11. Filtre selon l'une quelconque des revendications précédentes, **caractérisé en ce que** l'élément inférieur de boîtier (3) se compose d'un élément médian cylindrique (10), d'une bague de raccordement (8) et d'un fond de cuvette (11).

12. Filtre selon l'une quelconque des revendications précédentes, **caractérisé en ce que** la bride de raccordement (4) forme avec l'élément filtrant (14) une unité modulaire.

13. Filtre selon l'une quelconque des revendications précédentes, **caractérisé en ce qu'**un capteur de niveau (16) est disposé sous l'extrémité libre de l'élément filtrant (14).

14. Filtre selon l'une quelconque des revendications précédentes, **caractérisé en ce que** l'élément supérieur de boîtier (2) est doté d'une tige de positionnement (41) s'engageant dans une ouverture de positionnement (42).

15. Filtre selon l'une quelconque des revendications précédentes, **caractérisé en ce que** l'élément supérieur de boîtier (2) et l'élément inférieur de boîtier (3) sont reliés à un bloc fonctionnel (24) avec un affichage de pression différentielle (25) et une évacuation de condensat.

16. Filtre selon l'une quelconque des revendications précédentes, **caractérisé en ce qu'**un capteur de niveau (47) est relié par le biais d'un adaptateur d'évacuation (46) à une conduite ascendante (19), une liaison enfichable (45) pour condensat et une liaison enfichable électrique (58) sont reliées au bloc fonctionnel (24).

17. Filtre selon la revendication 16, **caractérisé en ce que** l'adaptateur d'évacuation (46) s'étend entre l'élément filtrant (14) et l'élément inférieur de boîtier (3).

18. Filtre selon l'une quelconque des revendications précédentes, **caractérisé en ce que** l'adaptateur d'évacuation (46) entoure l'élément filtrant avec une pièce de tête (70).

19. Filtre selon l'une quelconque des revendications précédentes, **caractérisé en ce que** l'élément filtrant (14) est doté de nervures support (71, 72, 73) radiales et la pièce de tête (70) est disposée respectivement entre deux nervures support (71, 72).

20. Filtre selon l'une quelconque des revendications précédentes, **caractérisé en ce que** le capteur de niveau (47) prend l'élément filtrant (14) par en dessous à la manière d'une mâchoire.

21. Filtre selon l'une quelconque des revendications précédentes, **caractérisé en ce que** le couvercle (13) et le capteur de niveau (16, 47) forment une unité modulaire.

22. Filtre selon l'une quelconque des revendications précédentes, **caractérisé en ce qu'**une conduite ascendante (19) centrée passe par l'élément filtrant (14) vers le bloc fonctionnel (24).

23. Filtre selon l'une quelconque des revendications précédentes, **caractérisé en ce qu'**une électrovanne (51) commandée directement par le capteur de niveau (47) avec noyau plongeur (52) couché est disposée dans le bloc fonctionnel (24).

24. Filtre selon l'une quelconque des revendications précédentes, **caractérisé en ce que** le bloc fonctionnel (24) est doté d'une soupape à membrane (67), pilotée par le biais d'une soupape électromagnétique (66), avec membrane verticale.

25. Filtre selon l'une quelconque des revendications précédentes, **caractérisé par** une transmission d'énergie et d'informations sans contact entre l'adaptateur d'évacuation (47) et l'unité fonctionnelle (24) à l'aide de deux bobines et d'un tore de ferrite.

26. Filtre selon l'une quelconque des revendications précédentes, **caractérisé en ce que** le canal d'amenée et d'évacuation (28, 29) sont pourvus d'adaptateurs de raccordement (5, 6).

27. Filtre selon l'une quelconque des revendications précédentes, **caractérisé en ce qu'**une cloison de séparation (81) s'étend entre le canal d'amenée et d'évacuation (28, 29).

28. Elément filtrant (14) avec un espace intérieur (21) pour un filtre avec un boîtier avec un élément supérieur (2) et un élément inférieur (3) comprenant un espace annulaire (34), l'élément supérieur (2) présentant un canal d'amenée (27) et un canal d'évacuation (29), **caractérisé en ce que** l'élément filtrant (14) est pourvu d'une bride de raccordement (4), qui est reliée de manière rotative à l'élément supérieur (2) du boîtier de sorte que la rotation de la bride de raccordement (4) permet de déplacer l'espace intérieur (21) de l'élément filtrant (14) ainsi que l'espace annulaire (34) entre l'élément filtrant (14) et le boîtier d'un canal à l'autre canal de l'élément supérieur (2).

29. Elément filtrant (14) selon la revendication 28, **caractérisé en ce que** l'élément filtrant (14) forme avec la bride de raccordement (4) une unité modulaire.

30. Elément filtrant (14) selon la revendication 28 ou 29, **caractérisé en ce que** la bride de raccordement (4) se compose en la vue de dessus d'une plaque avec deux ouvertures et d'une nervure (20).

31. Elément filtrant (14) selon la revendication 30, **caractérisé en ce que** la bride de raccordement (4) est pourvue de deux ouvertures (30, 32) coïncidentes disposées de manière énantiomorphe.

32. Elément filtrant (14) selon l'une quelconque des revendications 30 ou 31, **caractérisé par** des ouvertures (30, 32) en forme de segment disposées de manière énantiomorphe des deux côtés de la nervure (20).

33. Elément filtrant (14) selon l'une quelconque des revendications 30 à 32, **caractérisé en ce que** les ouvertures (30, 32) sont entourées dans la bride de raccordement (4) par respectivement une bague d'étanchéité (35, 36).
